# EUROPEAN PATENT SPECIFICATION

(11) **EP 2 661 950 B1**
(45) Date of publication and mention of the grant of the patent: **01.06.2016**
(21) Application number: 11859527.1
(22) Date of filing: 21.12.2011
(51) Int. Cl.: A01D 41/12, A01F 12/00

(54) **COMBINE HARVESTER**
MÄHDRESCHER
MOISSONNEUSE-BATTEUSE

(30) Priority: 05.01.2011 KZ 20110006
(43) Date of publication of application: 13.11.2013
(73) Proprietor: Republican Public Enterprise "Kazakh National Agrarian University" of Ministry of Education and Science of the Republic of Kazakhstan, Almaty 050010 (KZ)
(72) Inventor: SADYKOV, Zharylkasyn, Almaty 050008 (KZ); ESPOLOV, Tlektes, Almaty 050010 (KZ); ZHALNIN, Eduard, Moscow 109428 (RU); ALPEYSOV, Shohan, Almaty 050008 (KZ); SADYKOVA, Saule, Almaty 050008 (KZ)
(74) Representative: Jeck, Anton
(86) International application number: PCT/KZ2011/000021
(87) International publication number: WO 2012/115495

(56) References cited:
- EP-A1- 0 250 654
- RU-C1- 2 179 792
- RU-C2- 2 265 302
- SU-A1- 810 128
- SU-A1- 1 449 053
- SU-A1- 1 628 909
- SU-A1- 1 695 849
- SU-A1- 1 695 849
- US-A- 3 481 342

## Description

The invention relates to combine harvesters for harvesting seed and grain crops by magnetically treating the freshly threshed seeds in order to alter their biophysical, biochemical and physicochemical parameters, and can be used in agriculture to magnetize the seeds of different types of crops during combine harvesting.

It is well known that development of combine harvesters is the most science-intensive activity and that the organization of combine harvester production is the most resource-intensive. Because of this, features and performance of combine harvesters are of great interest to various professionals.

Known is the harvester per classification of informal axioms of the working process of the threshing mechanism of a combine harvester [Zhalkin, E.V., 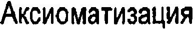 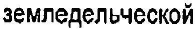 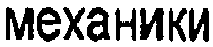 ( 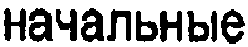 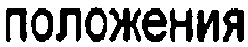 ) [Axiomatization of Agricultural Mechanics (Basic Terms)], M., VIM, 2002, p. 150-168].

However, the known combine harvester for harvesting seed and grain crops allows grain loss due to grain crushing and microdamage, with 10 % of microdamaged grain for each 1 % of crushed grain, which results in reduced germinating ability of seeds and reduced yield of crops. With that, producers of agriculture products select, based on features and performance, a combine harvester that in their opinion is the most efficient under their production conditions. Because of this, the above combine harvester, based on reduced germinating ability of the seeds and reduced yield of the crop is the least efficient under their production conditions.

It is well known that the technical level of combine harvesters is determined by the combination of agronomic, technical, operational, engineering, economic, performance, ergonomic, environmental and esthetic featurs, as well as by the degree of meeting safety, sanitary and hygiene requirements. A number of these groups of features are calibrated or limited by the relevant industry standards. Meeting GOSTs and OSTs requirements is mandatory when mastering series production of combine harvesters; otherwise they lose their legal basis for agricultural use. Hence there is no particular interest in comparing different designs of combine harvesters based on the above parameters because all of them must, to a greater or lesser degree, meet standard requirements. Of most interest are the features that allow different design means and production methods for achieving them, as this is what determines the degree of perfection of a combine harvester model.

It is well known that despite a large diversity of combine harvesters in terms of design, parameters and performance there is consistency of their general layout and process flow based on the use of beater-type threshing drums with a cylinder cage, straw shakers and air-and-screen cleaners. All these systems can differ in their design embodiment, but they have the same technological purpose and operating principle. Axial-rotary combine harvesters are also similar in many ways; therefore, these prerequisites can be called the identity principle of combine harvester design [Zhalnin, E.V., 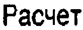 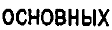 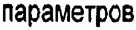 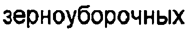 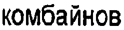 [Calculation of Basic Parameters of Combine Harvesters], M., VIM, 2001, p. 36].

Therefore, based on the design identity principles of modern combine harvesters one can assume that combine harvesters for seed and grain crops also allow grain loss due to grain crushing and microdamage which results in reduced germinating ability of the seeds and reduced yield of the crop, and because of this they are also the least efficient under production conditions.

The closest to the proposed combine harvester in its technical essence is the known technical solution wherein by exposing biological objects to electromagnetic field it is possible to increase the efficiency under production conditions and, for instance, accelerate certain biochemical reactions and thus facilitate altering a number of biochemical, biophysical and physicochemical parameters. The authors have selected this technical solution as the prototype. In particular, it is known that by exposure to electromagnetic field, for instance, in the 3-30 Hz band it is possible to increase the germinating ability of seeds and the yield of plants (see, for instance, patents RU Nos. 2179792, 2134944, etc.). Also, by exposure to electromagnetic field in the same frequency band it is possible to accelerate the processes of extraction from root crops, particularly from sugar beets, and increase sugar yield and the storage life of beets (see patents RU Nos. 2172094, 2172091, 2172095, 2172096, etc.).

However, all various current models of combine harvesters (USA, Japan, Germany, China, Russia, etc.) and technical solutions for exposing biological objects such as seeds etc. to electromagnetic field are not efficient enough because there are no combine harvesters that during magnetizing take into account the biological characteristics of particular freshly threshed seeds that are under particular conditions of transport from the TSD (threshing and separating device) to the grain hopper of the combine harvester. To increase the efficiency of combine harvesters under production conditions and achieve the best result of improving the germinating ability of seeds and increasing the yield of plants it is necessary to magnetically treat a particular portion of freshly threshed seeds from the TSD to the grain hopper of the combine harvester in a continuous mode, and treat it with a particular magnetic field with parameters selected specifically for a particular crop.

Also known is the device for pre-planting treatment of seeds in electromagnetic field comprising a magnetic core, a magnetizing coil and a pole with four modules [see patent RU No. 2265302, Cl. AO 1 C 1/00, 2005].

However, the use of the known device for magnetic treatment of freshly threshed seeds from the TSD to the hopper of the combine harvester increases the metal content of the combine harvester and complicates its design, which also results in lower efficiency of combine harvesters under production conditions. EP-A- 2 506 54 discloses a combine harvester according to the preamble of claim 1.

Thus, the invention is new and has no analogues.

### Disclosure of invention

The technical result comes down to increasing the efficiency of combine harvesters under production conditions and expanding the functional capabilities of transporting members of the combine harvester such as the grain auger, distributing augers, elevators, etc., for magnetic treatment of freshly threshed seeds transported from the TSD to the grain hopper of the combine harvester. The technical objective of the claimed invention is the possibility to take into account specific features of freshly threshed seeds; this is accomplished by selecting magnetic field with the most efficient parameters and applying it to a portion of freshly threshed seeds as they are transported from the TSD to the grain hopper of the combine harvester, in order to activate or suppress biological processes, in particular the germinating ability which affects changing the ripening times, increasing the yield and quality of crops, affecting their storage life without loss of quality, and other processes.

The objective is achieved as follows. Prior to harvesting, optimum parameters of the magnetic field for applying it to a portion of freshly threshed crop seeds are determined using a known methodology. A possibility is created to use this field that matches resonance frequencies of the seeds determined individually for each seed portion (be it of a type or even a variety of one and the same type) to affect (accelerate and, accordingly, decelerate) biochemical processes in them and thus affect their germinating ability and yield. The combine harvester has a modular design. Each module is an independent transporting device such as a grain auger, distributing augers, elevators, etc., wherein each module body is provided with a device with optimum parameters of magnetic field to magnetically treat a portion of freshly threshed seeds transported from the TSD to the hopper of the combine harvester in a continuous mode.

### Brief Description of Drawings

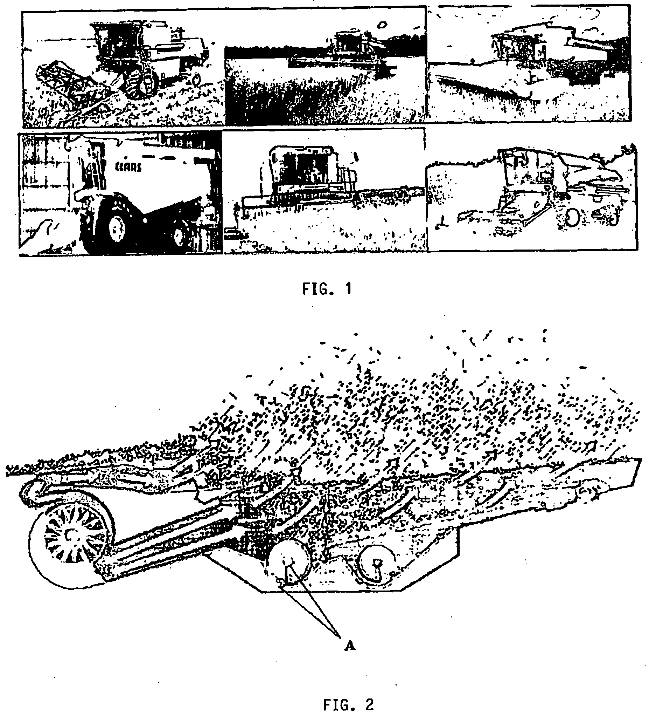

Fig. 1 shows current models of combine harvesters for traditional harvesting of seed and grain crops; Fig. 2 shows a fragment of the grain auger with the magnetic field device; Fig. 3 shows a fragment of the grain elevator with the magnetic field device; and Fig. 4 shows a fragment of the distributing auger with the magnetic field device.

### Embodiment of invention

The combine harvester for seed and grain crops which comprises the following, arranged in succession in accordance with the technological process: a header, an inclined chamber, a threshing and separating device and a modular design of transporting members (a grain auger, distributing augers, elevators, etc.), wherein each module body is provided with a magnetic field device A for magnetizing a portion of freshly threshed seeds transported from the TSD to the grain hopper of the combine harvester in a continuous mode. Here, at least one module is provided with a magnetic field device.

Furthermore, to increase the germinating ability of seeds and the yield of plants the device has optimum magnetic field parameters specially selected for each specific type of a crop and for each individual portion of freshly threshed seeds (be it of a type or even a variety of one and the same type) in the modules; for changing the ripening times of the crops; for activation of biological processes affecting the quality of crops; for activation of biological processes affecting the storage time of the crops without loss of quality, and other processes.

The positive effect of using the proposed combine harvester is manifested in activation or suppression of biological processes, particularly the germinating ability which affects the change of ripening times, and increasing the yield and quality of crops which affects their storage life without loss of quality, and other processes.

The present invention has the following advantages over the prototype:
- the design simplicity is achieved due to the use of basic transporting units of various models of current combine harvesters for traditional harvesting of seed and grain crops;
- improved quality of treatment of freshly threshed seeds is achieved due to the fact that electromagnetic field freely permeates the portion of seeds and treats the entire volume of grain transported by transporting modules and passing through their active and passive zones.

## Claims

1. The combine harvester for harvesting seed and grain crops which comprises the following, arranged in succession in accordance with the technical process: a header, an inclined chamber, a threshing and separating device and a series of transporting members (a grain auger, distributing augers, elevators, etc.) from the thresher to the grain hopper, which
has a modular design of the transporting work members, **characterised in that** each module body is provided with a magnetic field device for acting on a portion of freshly threshed seeds transported from the threshing and separating device to the grain hopper of the combine harvester in a continuous mode.

2. The combine harvester per Claim 1,
**characterised in that**
at least one module is provided with a magnetic field device.

3. The combine harvester per Claim 1,
**characterised in that**
to increase the germinating ability of seeds and increase the yield of plants the device is provided with optimum magnetic field parameters specially selected for the specific type of crop.

4. The combine harvester per Claim 1,
**characterised in that**
the device is provided with optimum magnetic field parameters for each individual portion of freshly threshed seeds (be it of a type or even a variety of one and the same type) in modules.

5. The combine harvester per Claim 1,
**characterised in that**
the device is provided with optimum magnetic field parameters for suppression of biological processes, particularly the germinating ability which affects the change of the ripening times of crops.

6. The combine harvester per Claim 1,
**characterised in that**
the device is provided with optimum magnetic field parameters for activation of biological processes, particularly the germinating ability which affects the quality of crops.

7. The combine harvester per Claim 1,
**characterised in that**
the device is provided with optimum magnetic field parameters for activation of biological processes, particularly the germinating ability which affects their storage life without loss of quality, and other processes.

## Patentansprüche

1. Kombinationserntemaschine zum Ernten von Samen- und Korn-Kulturpflanzen, die das Folgende in der Reihenfolge des technischen Prozesses aufweist: ein Kopfteil, eine geneigte Kammer, eine Dresch- und Trennvorrichtung und eine Reihe von Transportgliedern (eine Körnerschnecke, Verteilschnecken, Elevatoren usw.) vom Drescher bis zum Kornbeschickungstrichter, der ein modulares Design der Transportarbeitsglieder aufweist,
**dadurch gekennzeichnet,**
**dass** jeder Modulkörper eine Vorrichtung aufweist, die ein magnetisches Feld zur Wirkung auf eine Portion frisch gedroschener Samen darbietet, die von der Dresch- und Trennvorrichtung zum Kornbeschickungstrichter der Kombinationserntemaschine in stetiger Weise transportiert worden sind.

2. Kombinationserntemaschine nach Anspruch 1,
**dadurch gekennzeichnet,**
**dass** mindestens ein Modul mit einer ein magnetisches Feld aufweisenden Vorrichtung versehen ist.

3. Kombinationserntemaschine nach Anspruch 1,
**dadurch gekennzeichnet,**
**dass** zur Steigerung der Keimfähigkeit der Samen und zur Steigerung des Pflanzenertrags die Vorrichtung mit optimalen magnetischen Feldparametern versehen ist, die speziell für die besondere Kulturpflanze ausgewählt worden sind.

4. Kombinationserntemaschine nach Anspruch 1,
**dadurch gekennzeichnet,**
**dass** die Vorrichtung mit optimalen magnetischen Feldparametern für jede individuelle Portion frisch gedroschener Samen versehen ist, wobei die Samen von einem Typ oder einer Vielfalt von Typen sein können.

5. Kombinationserntemaschine nach Anspruch 1,
**dadurch gekennzeichnet,**
**dass** die Vorrichtung mit optimalen magnetischen Feldparametern zur Unterdrückung von biologischen Prozessen, insbesondere der Ertragsfähigkeit, versehen ist, die die Änderung der Reifezeiten der Kulturpflanzen beeinflusst.

6. Kombinationserntemaschine nach Anspruch 1,
**dadurch gekennzeichnet,**
**dass** die Vorrichtung mit optimalen magnetischen Feldparametern zur Aktivierung von biologischen Prozessen, insbesondere der Keimfähigkeit, versehen ist, die die Qualität der Kulturpflanzen beeinflusst.

7. Kombinationserntemaschine nach Anspruch 1,
**dadurch gekennzeichnet,**
**dass** die Vorrichtung mit optimalen magnetischen Feldparametern zur Aktivierung von biologischen Prozessen, insbesondere der Keimfähigkeit, versehen ist, die die Lagerdauer ohne Verlust der Qualität, und andere Prozesse beeinflusst.

## Revendications

1. Machine de récolte combinatoire de semences et de graines des cultures arables qui présente et comporte selon l'ordre du processus technique : une partie de tête, une chambre inclinée, un dispositif de battage et de séparation et une suite de lames transporteuses (une vis, une vis sans fin distributrice, des élévateurs ...etc) du battage à la trémie de graines présentant un design modulaire des disposés de transport, caractérisée de sorte que chaque corps de module est pourvu d'un dispositif qui se trouve en mesure, grâce à un champ magnétique d'action sur une portion de graines fraîchement battues, de transporter de manière continue du dispositif de battage et de séparation à la trémie de graines de ladite machine de récolte combinatoire.

2. Machine de récolte combinatoire selon revendication 1 est caractérisée de sorte qu'au minimum un module est muni d'un dispositif présentant un champ magnétique.

3. Machine de récolte combinatoire selon revendication 1 est caractérisée de sorte que le dispositif, en vue de l'augmentation de la faculté germinative des semences et en vue de l'augmentation du rendement agricole, est muni de paramètres des champs magnétiques optimaux qui ont été choisis spécialement pour des cultures arables spécifiques.

4. Machine de récolte combinatoire selon revendication 1 est caractérisée de sorte que le dispositif est pourvu de paramètres des champs magnétiques optimaux pour chaque portion individuelle de graines fraîchement battues où ces dernières pouvant appartenir à un seul type ou bien à une gamme de types.

5. Machine de récolte combinatoire selon revendication 1 est caractérisée de sorte que le dispositif est pourvu de paramètres des champs magnétiques optimaux visant la répression du processus biologique, en l'occurrence de la productivité des terres, influençant la période de maturation des cultures arables.

6. Machine de récolte combinatoire selon revendication 1 est caractérisée de sorte que le dispositif est pourvu de paramètres des champs magnétiques optimaux visant l'activation du processus biologique, particulièrement de la faculté germinative, influençant la qualité des cultures arables.

7. Machine de récolte combinatoire selon revendication 1 est caractérisée de sorte que le dispositif est pourvu de paramètres des champs magnétiques optimaux visant l'activation du processus biologique, particulièrement de la faculté germinative, influençant la période de stockage sans perte de qualité et des autres processus.
